# EUROPEAN PATENT SPECIFICATION

(11) **EP 0 942 359 B1**
(45) Date of publication and mention of the grant of the patent: **04.07.2012**
(21) Application number: 98102925.9
(22) Date of filing: 19.02.1998
(51) Int. Cl.: G06F 9/30, G06F 9/318, G06F 9/38

(54) **An apparatus for executing instructions of a program**
Vorrichtung zur Ausführung von Programmbefehlen
Dispositif pour l'exécution d'instructions de programme

(43) Date of publication of application: 15.09.1999
(73) Proprietor: Lantiq Deutschland GmbH, 85579 Neubiberg (DE)
(72) Inventor: Knuth, Robert, Dr., D-81737 München (DE); Rom, Amnon c/o I.C. COM, IL- 58001 Azor (IL); Blum, Rivka, IL-81825 Jerusalem (IL); Granot, Haim, IL-58001 Azor (IL); Hershko, Anat, IL-58001 Azor (IL); Lavi, Yoav, IL-81825 Raanana (IL); Yanni, Meny, IL-58001 Azor (IL); Shenderovitch, Georgy, IL-58001 Azor (IL); Cohen, Elliot, IL-81825 Raanana (IL); Weingarten, Eran, Tel Hashomer (IL)
(74) Representative: Isarpatent

(56) References cited:
- EP-A- 0 723 220
- FR-A- 2 199 896
- "SELECTING PREDECODED INSTRUCTIONS WITH A SURROGATE" IBM TECHNICAL DISCLOSURE BULLETIN, vol. 36, no. 6A, 1 June 1993 (1993-06-01), pages 35-38, XP000370750
- J. A. BARBER ET AL.: "MLID Addressing" IBM TECHNICAL DISCLOSURE BULLETIN, vol. 27, no. 3, October 1984 (1984-10), pages 1740-1745, XP002069681 NEW YORK US

## Description

The invention relates to a data processing apparatus for executing instructions of a program

The European patent application EP 0723220 A2 describes a parallel processing system comprising a parallel processing array with a plurality of processor elements. Each processor element decodes the same instruction while combining the instruction with an offset value stored in each respective processor element to produce a derived instruction which is unique to the processor element. A first type of basic instruction results in that the processor element performs a logical or arithmetic operation. A second type of basic instruction results in that the processor element generates a pointer address. A point address is used to access an alternative instruction stored in the alternative instruction storage. The alternative instruction is a very long instruction word VLIW which is used for providing parallel control of a plurality of primitive execution units.

Currently, there exist two main architectures for DSP processors. Both architectures make trade-offs between processing speed and program memory size wherein either the former or the latter enjoys the greater benefit. The first main architecture may also be called a regular machine which means that one single instruction is executed per machine- cycle. The second architecture is generally called a VLIW architecture (very long instruction word). With the VLIW architecture, several instructions are executed within one single machine-cycle.

A regular machine executing a single instruction per machine-cycle features a relatively small program data bus. Typically, such a program data bus is 32 bits wide. In a DSP processor environment, the number of computational units in the execution unit of the processor is typically smaller compared to the second above mentioned architecture. The program data bus width and the number of computational units are directly proportional to the power consumption of the processor. Thus, a regular processor architecture typically consumes less power than other advanced architectures. However, the major disadvantage of the regular architecture consists in that the number of MIPS (mega instructions executed per second) is smaller compared to the above mentioned VLIW architecture.

A regular machine is for example described in US patent 5,163,139 entitled "Instruction Preprocessor for Conditionally Combining Short Memory Instructions into Virtual Long Instructions". This regular machine comprises two computational units and a main program memory of regular program data width. The machine proposed in this patent further comprises an instruction preprocessor unit which checks whether or not two subsequent instructions in the program memory can be validly combined so as to form a new instruction word in its own. This new instruction word is then interpreted and executed by the two computational units of the machine. The machine of US patent 5,163,139 is limited in that it can only combine pairs of instructions which meet predefined criteria. Thus, the machine largely constrains a programmer in developing program code.

The second architecture (VLIW) as mentioned above is based on an instruction set philosophy in which the compiler packs a number of simple, non-interdependent operations into the same instruction word. This type of architecture has been proposed originally by J.A. Fisher in "Very Long Instruction Word Architectures and the ELI-512" in Proceedings of the 10th Annual Symposium on Computer Architecture, June 1983. The VLIW architecture assumes multiple computational units in the processor and several decoding units which analyse the instructions fetched from the program memory. A VLIW architecture has the advantage that several operations are executed in parallel, thus increasing the MIPS performance of the processor. However, a VLIW processor requires a program memory of a larger bit width. This is a burden for both the chip area required to implement the processor architecture and for its power consumption. Also, the programming skills required from a programmer are inherently higher for writing code for a VLIW processor since it requires to take into account the parallelism of the processor.

A particular VLIW processor has been proposed in US patent 5,450,556 entitled "VLIW Processor Which Uses Path Information Generated by a Branch Control Unit to Inhibit Operations Which Are Not on a Correct Path". This patent proposes a solution for efficiently dealing with jump instructions in a VLIW program. In order to overcome this problem, it is proposed to add a path expression field to the VLIW instruction. This path expression field is read by a branch control unit in the processor which operates so as to speed up conditional branch operations. As with all previous VLIW processor architectures, the structure proposed in US patent 5,450,556 suffers from the relatively large program memory required to store VLIW instructions, particularly in the case of execution steps which only allow for a small degree of parallelism.

The invention is based on the problem that highly parallel computer architectures demand a large program memory space. The invention thus seeks to lower the program memory demand while maintaining the processors' capability of executing instructions in a highly parallel manner.

The problem is solved with a data processing apparatus having the features of claim 1.

A preferred data processing apparatus for executing instructions of a program comprises a first instruction decoder, an address decoder, a plurality of computational units and an execution logic unit. The first instruction decoder sequentially fetches program instructions of a first type from a first program memory and decodes instructions of said first type. The address decoder determines the address of data to be loaded from or returned to a data memory. Each of said plurality of computational units executes operations upon data according to the interpretation of said first instruction decoder and provides the results of these operations. The execution logic provides said plurality of computational units with data and controls the operation of said plurality of computational units according to an instruction of said first type. The data processing apparatus is characterized in that said first instruction decoder discriminates whether said apparatus is to execute a referential instruction. The referential instruction then initiates the execution of an instruction of a second type.

Thus, the data processing apparatus of the invention is capable of executing two types of program instructions. Preferably, the two types of instructions are of a significantly different bit width wherein instructions of said first type have the shorter bit width. Depending on the actual instruction to be executed, the processing apparatus either executes an instruction word of a relatively short bit width or executes an instruction of a relatively large bit width. This allows for flexible program memory organisation and thus a reduction of total memory demand of a particular program.

A preferred embodiment of the inventive apparatus further comprises a second instruction decoder which fetches an instruction of said second type. In an even more preferred embodiment, instructions of said second type are stored in a second program memory. Thus, said second instruction decoder fetches instructions of said second type from said second program memory and subsequently decodes instructions of said second type.

By providing a separate memory unit for each of the instructions of said first type and said second type, it is possible to store frequently used instructions of said second type and easily access these instructions by said data processing apparatus. Preferably the bit width of each of said first and second program memory is set at a fixed length. Thus, the architecture of a preferred data processing apparatus is configurable to handle instructions of said first type and said second type in an efficient manner.

A preferred embodiment of the inventive apparatus is further characterized in that an instruction of said second type comprises a plurality of operators including data assignment information of operands and data assignment information of results. It is further preferred, that said execution logic comprises means for interpreting said instruction of said second type.

In a particularly preferred embodiment of the invention said referential instruction includes address information. The address information relates to data upon which the instruction of said second type is to be executed which instruction of said second type is referred to in said referential instruction. This preferred configuration of the inventive apparatus allows that data is fetched while the instruction of said second type is decoded. This can significantly increase the performance of the inventive apparatus.

In a preferred embodiment of the apparatus of the invention, it is configured to allow for a pipe-lined execution of instructions of any of the first or second type. This configuration particularly eases the simultaneous execution of operations.

A method of executing instructions for a data processing apparatus comprises the steps of fetching an instruction of a first type from a first program memory, decoding said instructions of said first type for determining the operation to be executed, reading operands from a data memory or from said data registers according to operands address information included in said instruction of said first type, executing an operation upon said operands, and writing the results of said operation into said data memory or into said data registers according to results address information included in said instruction of said first type. Upon decoding of a referential instruction which includes predetermined information so as to be decoded as such the steps of fetching an instruction of a second type according to information included in said referential instruction and decoding said instruction of said second type for determining the operations to be executed in parallel are carried out.

As has already been described with regard to the above mentioned preferred data processing apparatus of the invention, the method allows for a flexible usage of memory space because of the provision of two types of instructions. The additional information needed for carrying out a particular parallel operation is obtained by referring to further instruction information (instruction of said second type) in an instruction of said first type.

Said referential instruction includes address information which is decoded substantially at the time of decoding said referential instruction. This feature allows for a significant increase in processing speed because the data which is needed for the instruction, which is referred to in the referential instruction, is loaded at the time of decoding the referential instruction.

The steps of decoding a referential instruction and the step of fetching an instruction of said second type are executed substantially simultaneously wherein said referential instruction and said instruction of said second type are associated with each other. This allows for an even further increase in processing speed because the information required for carrying out an instruction of said second type is provided already at the time of decoding said referential instruction.

Said step of reading operands from a data memory and said step of decoding an instruction of said second type are executed substantially simultaneously wherein the operands read are associated with the instruction decoded. This preferred feature allows for an even more increase in processing speed as now all information is available to the computational units of the data processing apparatus for carrying out the operations according to the instruction of said second type.

Further advantages, features and possibilities of using the invention are explained in the following description of a preferred embodiment of the invention which is to be read in conjunction with the attached drawings. In the drawings;
- Figure 1: depicts a circuit diagram of a preferred data processing apparatus according to the invention;
- Figure 2a: shows an example of the structure of a very long instruction word as is used in the prior art;
- Figure 2b: shows the structures of instructions of two dif- ferent types as used in the preferred embodiment of the invention;
- Figure 3a: is a table showing the sequence of pipe-lined in- structions in a data processing apparatus of the prior art; and
- Figure 3b: is a table showing the sequence of instructions according to a preferred embodiment of the inven- tion.

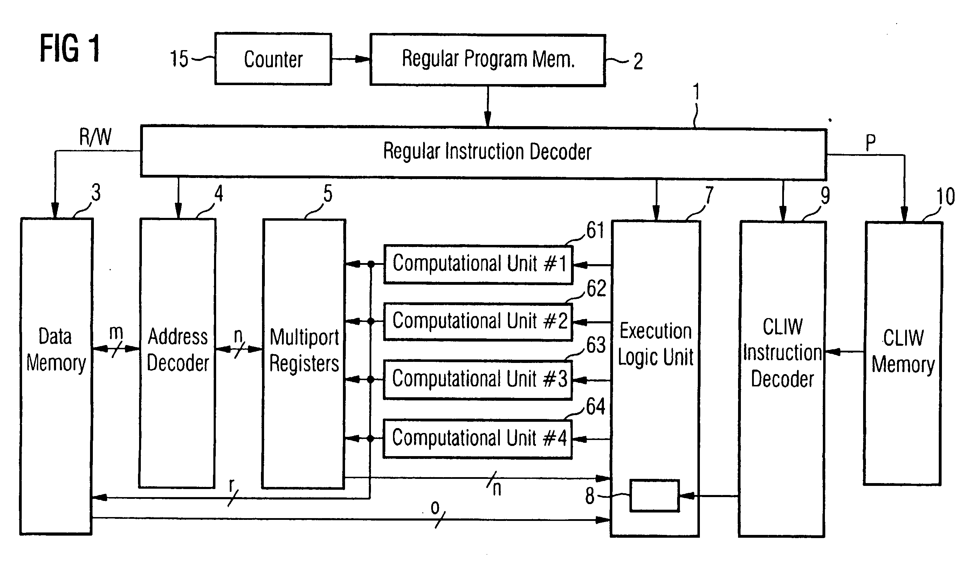

Figure 1 shows the basic architecture of the preferred embodiment of a data processing apparatus according to the invention. The data processing apparatus which is particularly apt for digital signal processing is configured for a parallel execution of several operations and thus comprises a plurality of computational units. In the preferred embodiment, there are provided four computational units which are assigned reference numerals 61 to 64. Each of the computational units 61 to 64 is provided with operands data from an execution logic unit 7. Each of the computational units on the other hand delivers the result of a computation to one or more registers of a bank 5 of multiport registers and/or to a data memory 3 through a data bus line connecting said computational units 61 to 64 to said data memory 3, said data bus having a bit width of r bits. In the preferred embodiment two results may be written directly into said data memory having a data bit width of 16 bits. Thus, the bit width r equals 2 x 16 bits.

The contents of each of said multiport registers 5 is fed back through a bus line of bit width n to said execution logic unit 7. The contents of said multiport registers 5 is also provided to an address decoder 4 for selectively writing data from said multiport registers 5 into said data memory 3. The multiport registers 5 are therefore connected to said address decoder 4 through a bus line also having a bit width of n bits. In the preferred embodiment each register has a data bit with of 16 bit. Further, the bank 5 of multiport registers comprises a total of 16 registers. Thus, n is set to 16 x 16 bit = 256 bits in the preferred embodiment of the data processing apparatus.

With this kind of configuration of the preferred embodiment, the data processing apparatus of the invention can be operated either as a register-memory architecture machine or a memory-memory architecture machine. On the one hand, the execution logic unit 7 not only receives data from said multiport registers 5 but also directly from said data memory 3. On the other hand, the computational units 61 to 64 not only write to said multiport registers 5 but also directly to said data memory. It is clear to a person skilled in the art that the invention can similarly be embodied in a load-store architecture (or alternatively called register-register architecture) machine without deviating from the scope of this invention.

As already mentioned above, the execution logic unit 7 not only receives operands data from said multiport registers 5 but also from said data memory 3 through a bus line having a bit width of o bits. The bit width o of the data bus between said data memory 3 and said execution logic unit 7 is proportional to the number of operands to be loaded from said data memory 3 and the bit width of each operand. In the preferred embodiment there are loaded a maximum of four operands from said data memory 3 to said execution logic unit 7, each having a bit width of 16 bits, resulting in a bus width o of 4 x 16 bits = 64 bits.

The execution logic unit 7 receives decoded instruction information from a regular instruction decoder 1. The execution logic unit 7 thus receives the operands for carrying out a particular instruction from said multiport registers 5 and/or said data memory 3 and delivers them to said computational units 61 to 64 as indicated by the decoded regular instruction. The execution logic unit 7 further comprises means 8 for receiving a decoded instruction from a CLIW instruction decoder 9 (Configurable Length Instruction Word). Once a decoded CLIW instruction is received, said receiving means 8 in said execution logic unit 7 makes sure that the execution is not carried out according to information received from said regular instruction decoder 1 but exclusively according to the decoded instruction as received from said CLIW instruction decoder 9. Thus, said receiving means 8 replaces all the information from said regular instruction decoder 1 with the information received from said CLIW instruction decoder 9.

Said regular instruction decoder 1 receives a line of code from a regular program memory 2 for decoding the instruction encoded therein. For sequential operation of the data processing apparatus, the regular program memory 2 is addressed by the output of a program counter 15. The regular instruction decoder 1 delivers decoded instruction information to said execution logic unit 7 and delivers an address encoded in a particular instruction to said address decoder 4. The regular instruction decoder 1 is further connected to said CLIW instruction decoder 9 for indicating the fact that a CLIW instruction is to be decoded next.

The address decoder 4 receives address information from said regular instruction decoder 1 for decoding the address encoded in a particular instruction. The decoded address is delivered through a bus line having a bit width of m bit to said data memory 3. The bit width m is proportional to the number of addresses and the number of bits per address to be addressed at a time. In the preferred embodiment, the address decoder 4 decodes four addresses each having a bit width of 16 bits thus resulting in a bit width m of 64 bits for the bus line connecting said address decoder 4 and said data memory 3. Said data memory 3 is further connected to said regular instruction decoder 1 through lines R/W indicating to said data memory 3 whether data at specified addresses is to be read from or is to be written into.

Said CLIW instruction decoder 9 is connected to a CLIW memory 10 having stored therein lines of code representing CLIW instructions. The particular instruction to be read from said CLIW memory 10 is indicated by said regular instruction decoder 1 through a line P connecting said regular instruction decoder 1 to said CLIW memory 10. Thus, the regular instruction decoder 1 points to a particular storage location of said CLIW memory 10, the CLIW instruction being stored therein is to be delivered to said CLIW instruction decoder 9.

The general operation of the preferred embodiment of the invention can be described as follows. The execution logic unit 7 operates according to instructions sequentially read from said regular program memory 2. As long as said regular instruction decoder 1 does not decode a special instruction, the operation of said CLIW instruction decoder 9 and said CLIW memory 10 is practically inhibited. However, once said regular instruction decoder 1 decodes a special instruction 2 (which also can be called a referential instruction), the function of said CLIW instruction decoder 9 and said CLIW memory 10 is activated. In effect, the execution logic unit 7 then exclusively operates according to information received from said CLIW instruction decoder 9 instead of information received from said regular instruction decoder 1.

In the preferred embodiment of the invention the mentioned special instruction from said regular program memory 2 contains address information which the regular instruction decoder 1 delivers to said address decoder 4. In order for the data processing machine to execute such a special instruction, instruction information from said special instruction and instruction information from an associated CLIW instruction are combined.

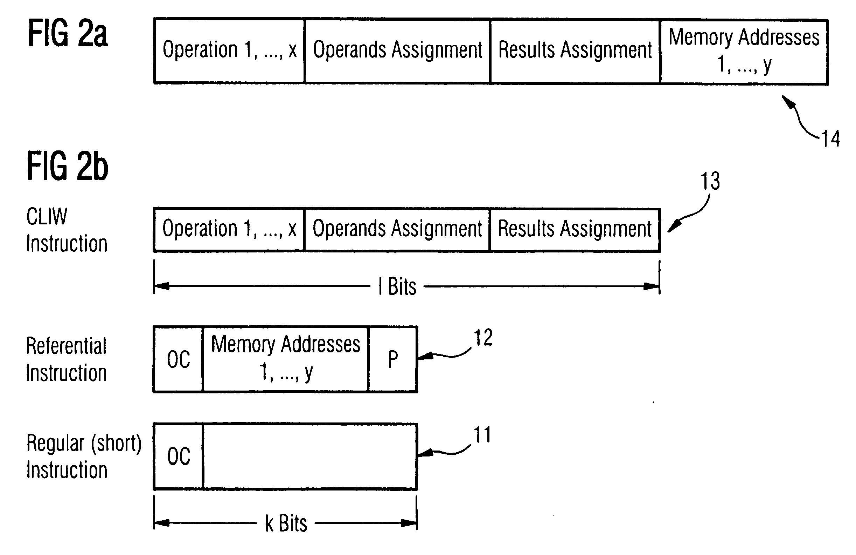

Figure 2a shows the typical structure of a very long instruction word according to the prior art. The instruction word 14 of figure 2a basically consists of four segments. In a first segment, a plurality of operations are defined. In a second segment, operands are assigned to each of these operations. In a third segment, results are assigned to each of these segments. Finally in a fourth segment, memory addresses are defined for the operands and results assigned in said second and said third segments, respectively.

Figure 2b shows the structure of instruction words which are used in conjunction with the invention. There is shown a regular (short) instruction 11 having a length of k bits. A regular instruction 11 includes an instruction header containing an operation code (op code) which defines the type of instruction. Figure 2b further shows the structure of a referential instruction 12 which also has a length of k bits. A special op code is stored in the op code header of the referential instruction 12 which op code distinguishes the referential instruction 12 from other regular instructions 11. The referential instruction 12 also includes a plurality of memory addresses upon which a particular referential instruction is to be executed. Finally the referential instruction includes a pointer P which points to a CLIW instruction.

Figure 2b also shows the structure of a CLIW instruction 13. The structure is basically identical with the one of a VLIW instruction 14 according to figure 2a except that a CLIW instruction 13 does not include any memory addresses. In fact, the addresses for a particular CLIW instruction are included in a referential instruction 12 which points through its pointer P to a particular CLIW instruction 13. A CLIW instruction is shown to have a bit length of 1 bits.

Whereas regular instructions 11 and referential instructions 12 are stored in the regular program memory 2, CLIW instructions are stored in the CLIW memory 10. Thus, the regular program memory 2 and the CLIW memory 10 are configured with the respective bit length of the instruction words stored therein. In the preferred embodiment, regular instructions 11 and referential instructions 12 have a bit length of 48 bits. On the other hand, CLIW instructions 13 have a bit length of 96 bits. While the regular instruction decoder 1 is sequentially and continuously decoding instructions from said regular program memory 2, additional instruction information from said CLIW memory 10 will only be supplied to said execution logic unit 7 when said regular instruction decoder 1 decodes a referential instruction. At this point, the decoded instruction from the CLIW instruction decoder 9 is fed to the receiving means 8 of the execution logic unit 7 for replacing all information which would be normally supplied by said regular instruction decoder 1.

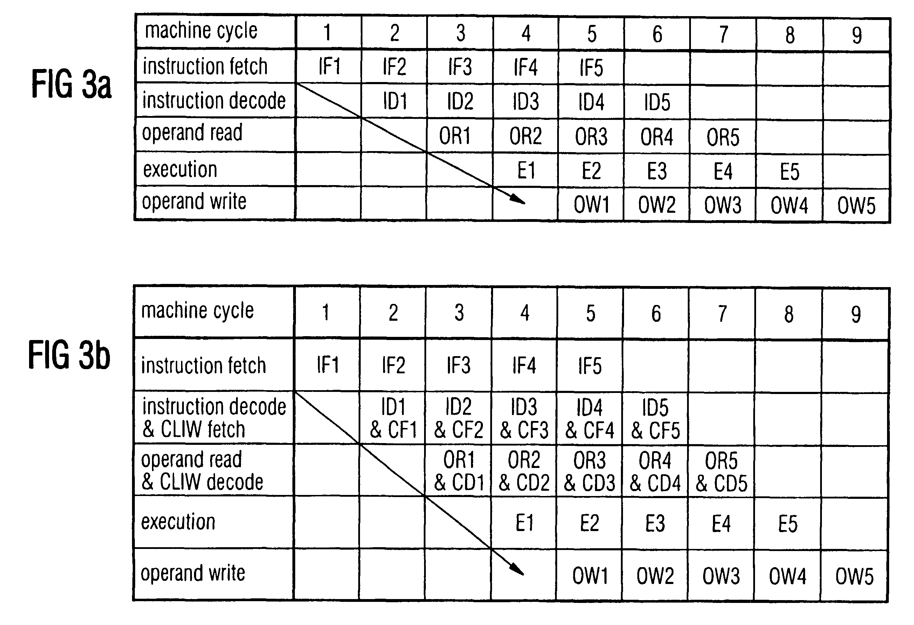

Figure 3a is a table showing the execution of normal VLIW instructions in a processor with 5 stage pipeline according to the prior art. The table of figure 3a shows the steps of instruction fetch, instruction decode, operand read, execution and operand write.

Figure 3b is a table showing the pipelined execution of a program according to the invention. In terms of processing regular program instructions, the sequence of operations is identical with the one as shown in the table of figure 3a. In case a referential instruction is encountered however, two additional steps are inserted. At the time of decoding a regular instruction, which is decoded as being a referential instruction, the CLIW instruction referred to in the referential instruction is fetched. See for example the line having line header "instruction decode and CLIW fetch" between machine cycle 2 and machine cycle 6. Also, at the time operands are read from memory, the CLIW instruction fetched in the previous machine cycle is decoded. This is possible because the referential instruction 12 contains all address information to read the needed operands. A referential instruction 12 contains a pointer to a particular CLIW instruction which is to be fetched and decoded so as to be executed with data to be read. It is referred to the table in figure 3b to the line having line header "operand read and CLIW decode" between machine cycles 3 and 7. The sequence of operations carried out in pipeline for a particular instruction follows a diagonal line in the table as indicated by an arrow.

A prior art processor which controls multiple execution units in parallel by one VLIW instruction usually requires large program memory space for the optimum usage of parallel execution of the data processing apparatus. The invention restricts the usage of long instructions to very time consuming parts of an algorithm, the so called inner loops. Thus frequently executed instructions are executed in a highly parallel fashion while significantly decreasing the required memory space for program code for instructions which cannot be carried out in parallel. The code of a VLIW instruction of the prior art determines for each execution step the operation codes, the operand assignments, the output assignments and the memory addresses. The great variety of such configurations results in a high bit width of each of the VLIW instructions. Although VLIW instructions offer full coding flexibility for each execution step and thus always support maximum parallelism, the program code consumes a large amount of program memory, particularly for those execution steps which do not allow full parallel operation.

Typical programs for digital signal processors generally consist of inner loops in which few instructions are repeated very often. The instructions in an inner loop should be supported by maximum parallelism of the digital signal processor because they can reduce the required run time to a large extent.

The invention solves this problem by using short instructions combined with configurable length instruction words (CLIW). Thus, the invention offers the advantage of maximizing the execution efficiency of inner loops and limited program space for program code outside these inner loops.

The regular instructions outside the inner loops are executed sequentially. A regular instruction is directed to only certain frequent connections and operations of the execution units and the necessary operands. All regular instructions are directly fetched from the regular program memory 2. Additionally, CLIW instructions are stored in a dedicated CLIW memory 10. A special referential instruction is used for initiating the execution of CLIW instructions. The referential instruction loads a CLIW instruction from the CLIW memory 10. The address P of the CLIW instruction to be fetched is defined by the referential instruction.

A CLIW instruction 13 defines all possible types of operation, operand connections and output connections. The referential instruction includes all required memory addresses for the operations defined in the CLIW instruction associated therewith. Thus, the referential instruction together with its associated CLIW instruction has all the information that a VLIW instruction according to the prior art requires.

Since the bit width of regular program instructions (and thus also of referential instructions) is preferably configured to be significantly lower than the bit width of CLIW instructions, it is possible to write a much more compact program code than with VLIW instructions only.

The program code for each execution of the same CLIW instruction includes just another regular (short) referential instruction 12. Since typically the type of parallel operations and connections do not change within a set of CLIW instructions (for example for the execution of matrix operations) it is possible to save program space for CLIW instructions by simply changing the memory address in the referential instruction.

It is thus preferred to specify the memory address of operands within a referential instruction 12 independent of the reference to a particular CLIW instruction 13. This does not only allow for using different memory operands with the same CLIW instruction but this also speeds up the instruction flow execution within the processor when using a pipelined execution.

The number of required CLIW instructions in the inner loops depends on the actual program. There is a possibility to extend the fixed number of available CLIW instructions in a CLIW memory. After initialization, the CLIW memory can be dynamically reconfigured by recalling referential instructions. Different packets of CLIW instructions can be used in different parts of an algorithm. This feature is enabled by reloading CLIW memory packets at run time.

The size of the CLIW memory is user definable. Usually the size of the CLIW memory will be much smaller than the program memory. Those parts of the CLIW memory which contain always a constant set of CLIW instructions can be implemented as a read-only-memory (ROM). CLIW instructions which are encoded in a ROM can still be called together with data at different memory addresses because the address information is included in the referential instruction.

## Claims

1. A data processing apparatus for executing instructions of a program comprising a plurality of instructions, said apparatus having:
(a) a regular instruction decoder (1) for sequentially fetching program instructions from a first program memory (2) and for decoding said program instructions,
wherein the regular instruction decoder (1) discriminates whether the program instructions are regular instructions (11) or referential instructions (12);
(b) an address decoder (4) for determining the address of data to be loaded from or written to a data memory (3);
(c) a plurality of computational units (61, 62, 63, 64) for executing operations upon data according to the interpretation of said regular instruction decoder (1) and for providing the results of these operations;
(d) an execution logic unit (7) for providing said plurality of computational units (61, 62, 63, 64) with data and for controlling the operation of said plurality of computational units (61, 62, 63, 64) according to a regular instruction (11),
(e) a configurable length instruction word decoder (9) for decoding a configurable length instruction word (13) stored in a second program memory (10), wherein the configurable length instruction (13) consists of an operation segment which comprises a plurality of operation codes, an operands assignment segment for assigning operands to each of the operations and a result assignment segment comprising result assignments;
(f) said execution logic unit (7) comprising receiving means (8) for receiving a decoded configurable length instruction word from said configurable length instruction word decoder (9),
(g) wherein the configurable length instruction word decoder (9) and the second program memory (10) are activated to operate the execution logic unit (7) according to the decoded configurable length instruction word (13) when the decoded program instruction is a referential instruction (12) which includes a pointer address to the stored configurable length instruction word (13).

2. The apparatus according to claim 1, **characterized in that** said apparatus is configured to allow for a pipe-lined execution of program instructions (11, 12) and configurable length instruction words (13).

3. The apparatus according to claim 1, **characterized in that** operand and result address information is decoded at the time of decoding said referential instruction (12).

4. The apparatus according to claim 2, wherein the configuration of said apparatus is **characterized in that** decoding a referential instruction (12) and fetching a configurable length instruction word (13) which is associated with a particular referential instruction (12), are executed simultaneously.

5. The apparatus according to claim 1 wherein the address decoder (4) and the configurable length instruction word decoder (9) are capable of simultaneously reading operands from a data memory (3) and decoding a configurable length instruction word (13) which is associated with said operands.

## Patentansprüche

1. Datenverarbeitungsvorrichtung zum Ausführen von Befehlen eines Programms, das eine Vielzahl von Befehlen umfasst, wobei die Vorrichtung Folgendes aufweist:
(a) einen normalen Befehlsdecoder (1) zum sequenziellen Abrufen von Programmbefehlen aus einem ersten Programmspeicher (2) und zum Decodieren der Programmbefehle, wobei der normale Befehlsdecoder (1) unterscheidet, ob die Programmbefehle normale Befehle (11) oder referenzielle Befehle (12) sind;
(b) einen Adressdecodierer (4) zum Bestimmen der Adresse von Daten, die aus einem Datenspeicher (3) zu laden oder in einen Datenspeicher (3) zu schreiben sind;
(c) eine Vielzahl von Recheneinheiten (61, 62, 63, 64) zum Ausführen von Operationen an Daten gemäß der Interpretation des normalen Befehlsdecoders (1) und zum Ausgeben der Ergebnisse dieser Operationen;
(d) eine Ausführungslogikeinheit (7) zum Versorgen der Vielzahl von Recheneinheiten (61, 62, 63, 64) mit Daten und zum Steuern des Betriebes der Vielzahl von Recheneinheiten (61, 62, 63, 64) gemäß einem normalen Befehl (11),
(e) einen Configurable Length Instruction Word-Decoder (9) zum Decodieren eines Befehlswortes von konfigurierbarer Länge (13), das in einem zweiten Programmspeicher (10) gespeichert ist, wobei der Befehl von konfigurierbarer Länge (13) aus einem Operationssegment, das eine Vielzahl von Operationscodes umfasst, einem Operandenzuweisungssegment zum Zuweisen von Operanden zu jeder der Operationen und einem Ergebniszuweisungssegment, das Ergebniszuweisungen umfasst, besteht;
(f) wobei die Ausführungslogikeinheit (7) ein Empfangsmittel (8) zum Empfangen eines decodierten Befehlswortes von konfigurierbarer Länge von dem Configurable Length Instruction Word-Decoder (9) umfasst,
(g) wobei der Configurable Length Instruction Word-Decoder (9) und der zweite Programmspeicher (10) aktiviert werden, um die Ausführungslogikeinheit (7) gemäß dem decodierten Befehlswort von konfigurierbarer Länge (13) zu betreiben, wenn der decodierte Programmbefehl ein referenzieller Befehl (12) ist, der eine Zeigeradresse zu dem gespeicherten Befehlswort von konfigurierbarer Länge (13) enthält.

2. Vorrichtung nach Anspruch 1, **dadurch gekennzeichnet, dass** die Vorrichtung dafür konfiguriert ist, eine Pipeline-Ausführung von Programmbefehlen (11, 12) und Befehlsworten von konfigurierbarer Länge (13) zu gestatten.

3. Vorrichtung nach Anspruch 1, **dadurch gekennzeichnet, dass** Operanden- und Ergebnisadress-Informationen zum Zeitpunkt des Decodierens des referenziellen Befehls (12) decodiert werden.

4. Vorrichtung nach Anspruch 2, wobei die Konfiguration der Vorrichtung **dadurch gekennzeichnet ist, dass** das Decodieren eines referenziellen Befehls (12) und das Abrufen eines Befehlswortes von konfigurierbarer Länge (13), das einem bestimmten referenziellen Befehl (12) zugeordnet ist, gleichzeitig ausgeführt werden.

5. Vorrichtung nach Anspruch 1, wobei der Adressdecodierer (4) und der Configurable Length Instruction Word-Decoder (9) in der Lage sind, gleichzeitig Operanden aus einem Datenspeicher (3) zu lesen und ein Befehlswort von konfigurierbarer Länge (13), das den Operanden zugeordnet ist, zu decodieren.

## Revendications

1. Dispositif de traitement de données destiné à exécuter des instructions d'un programme comprenant une pluralité d'instructions, ledit dispositif comportant :
(a) un décodeur d'instructions normales (1) servant à extraire séquentiellement des instructions de programme d'une première mémoire de programme (2) et à décoder lesdites instructions de programme, dans lequel le décodeur d'instructions normales (1) détermine si les instructions de programme sont des instructions normales (11) ou des instructions référentielles (12) ;
(b) un décodeur d'adresses (4) servant à déterminer l'adresse des données devant être chargées à partir d'une mémoire de données ou écrites dans une mémoire de données (3) ;
(c) une pluralité d'unités de calcul (61, 62, 63, 64) servant à exécuter des opérations sur des données selon l'interprétation dudit décodeur d'instructions normales (1) et à fournir les résultats de ces opérations ;
(d) une unité logique d'exécution (7) servant à fournir des données à ladite pluralité d'unités de calcul (61, 62, 63, 64) et à commander le fonctionnement de ladite pluralité d'unités de calcul (61, 62, 63, 64) selon une instruction normale (11) ;
(e) un décodeur de mots d'instruction de longueur configurable (9) servant à décoder un mot d'instruction de longueur configurable (13) stocké dans une seconde mémoire de programme (10), dans lequel l'instruction de longueur configurable (13) se compose d'un segment d'opération qui comprend une pluralité de codes d'opération, d'un segment d'affectation d'opérandes pour affecter des opérandes à chacune des opérations, et d'un segment d'affectations de résultats comprenant des affectations de résultats ;
(f) ladite unité logique d'exécution (7) comprenant un moyen de réception (8) servant à recevoir un mot d'instruction de longueur configurable décodé dudit décodeur de mots d'instruction de longueur configurable (9),
(g) dans lequel le décodeur de mots d'instruction de longueur configurable (9) et la seconde mémoire de programme (10) sont activés pour faire fonctionner l'unité logique d'exécution (7) selon le mot d'instruction de longueur configurable décodé (13) lorsque l'instruction de programme décodée est une instruction référentielle (12) qui inclut une adresse de pointeur du mot d'instruction de longueur configurable stocké (13).

2. Dispositif selon la revendication 1, **caractérisé en ce que** ledit dispositif est configuré pour permettre une exécution pipelinée d'instructions de programme (11, 12) et de mots d'instruction de longueur configurable (13).

3. Dispositif selon la revendication 1, **caractérisé en ce que** les informations d'adresse d'opérandes et de résultats sont décodées au moment du décodage de ladite instruction référentielle (12).

4. Dispositif selon la revendication 2, dans lequel la configuration dudit dispositif est **caractérisée en ce que** le décodage d'une instruction référentielle (12) et l'extraction d'un mot d'instruction de longueur configurable (13) qui est associé à une instruction référentielle particulière (12) sont exécutés simultanément.

5. Dispositif selon la revendication 1, dans lequel le décodeur d'adresses (4) et le décodeur de mots d'instruction de longueur configurable (9) sont capables de lire des opérandes à partir d'une mémoire de données (3) et de décoder un mot d'instruction de longueur configurable (13) qui est associé auxdits opérandes simultanément.
